# EUROPEAN PATENT SPECIFICATION

(11) **EP 2 677 282 B1**
(45) Date of publication and mention of the grant of the patent: **24.06.2015**
(21) Application number: 13169704.7
(22) Date of filing: 29.05.2013
(51) Int. Cl.: G01D 5/347

(54) **Encoder device for optical detection of movement or position**
Codierungsvorrichtung zur optischen Detektion von Bewegung oder Position
Dispositif de codage de détection optique de position ou de mouvement

(30) Priority: 18.06.2012 SE 1250642
(43) Date of publication of application: 25.12.2013
(73) Proprietor: LEINE & LINDE AB, 645 21 Strängnäs (SE)
(72) Inventor: Andréason, Per, 645 93 Strängnäs (SE)
(74) Representative: Zacco Sweden AB

(56) References cited:
- EP-A1- 0 564 683
- US-A- 4 703 176
- US-A1- 2006 151 686
- US-B1- 6 476 380

## Description

### TECHNICAL FIELD

The present invention relates to an encoder device and in particular to an encoder device for optical detection of movement or position.

### BACKGROUND

A rotary encoder is an important sensor commonly used in closed loop velocity control and positioning applications within industrial applications, for example in plants for paper or steel making in which the rotary encoder may be arranged to detect rotary movement of a machine shaft. In general, rotary encoders comprise a detector part which detects rotary motion and generates an electric signal corresponding to the detected angular position change. Different values, such as angular velocity and number of revolutions may be derived from the signal. There are several different types of rotary encoders, for example optoelectrical encoders. This type of encoder includes an encoding disc that has an optically readable pattern. The disc pattern is read by one or more detectors which each deliver an electric signal in relation to the amount of light that is received in the detector, so that movement of the encoding disc in relation to the detector will be indicated by changes in the electric signal. The encoding disc includes a periodic pattern, such as a plurality of light and dark fields of mutually the same size, for instance. When the encoding disc is twisted or rotated, the change between dark and light fields can be detected and a change in angle thus determined.

The detector in the optoelectrical encoder comprises a light sensitive semiconductor chip which delivers the electric signal in relation to the amount of light that is received by the light sensitive semiconductor chip. This light sensitive semiconductor chip is often mounted on a circuit board. The light sensitive semiconductor chip often has contact areas on the upper light sensitive side. In order to connect these contact areas to the circuit board on which the light sensitive semiconductor chip is mounted wire bonding is used.

Wire bonding is a common method of making interconnections between semiconductor chips and a circuit boards during semiconductor device fabrication. Wire bonding must however be done in a clean room environment. Providing a clean room environment during manufacturing of encoders is expensive.

US 4703176 defines a rotary optical encoder where wire bonding is used to connect the printed circuit board with the light sensitive semiconductor chip.

Encoders are often used in environments that are subjected to much vibration, which may cause the bond wires to come off. Vibrations or shocks may also cause mechanical contact with bond wires. These problems cause the encoder to malfunction. A faulty rotary encoder could lead to unscheduled stops of machines or plants for service or replacement of the encoder. This is disadvantageous since it leads to costly drops in production.

One way to protect against humidity and mechanical contact between the bond wires is to use silicon around the bond wires. The silicon may however move with temperature changes. This can result in that the bond wires and/or the light sensitive semiconductor come loose.

There is therefore a need for an improved solution for the use of light sensitive semiconductor chips in encoders which solution solves or at least mitigates at least one of the above mentioned problems.

### SUMMARY

An object of the present invention is thus to provide an encoder device for optical detection of movement or position which solves or at least mitigates at least one of the above mentioned problems.

A first embodiment of the present invention provides an encoder device for optical detection of movement or position. The encoder device comprises a first terminal for delivery of an electric measurement code signal. The encoder device further comprises a first printed circuit board, a detector means mounted on the first printed circuit board and a code means provided with a pattern. The detector means and the code means being displaceable relative to each other, wherein said detector means is disposed to generate an electric measurement code signal in dependence on the relative displacement. The detector means includes at least one light-sensitive semiconductor chip having a first light-sensitive chip surface and a second chip surface on opposing sides. The first light-sensitive chip surface has a first chip contact area for electrical connection. The encoder device further comprises a second printed circuit board positioned between the detector means and the code means, wherein the second printed circuit board is shaped so as to allow the passage of light from the code means to the first light-sensitive chip surface. The second printed circuit board has a first PCB contact area connected to a terminal, the terminal being located on said second printed circuit board; wherein the first PCB contact area is connected to the first chip contact area by solder, electrically conducting glue or by ohmic contact.

This solution enables an advantageously simple and straightforward production process of the encoder device, while the second printed circuit board also advantageously provides mechanical protection for the at least one light-sensitive semiconductor chip during use of the encoder device. Moreover, this solution advantageously allows for a reduced production cost, as compared to encoders including bond wires for electrical connections, since this solution enables the production of the complete encoder device without the need of a costly clean room inherently needed for the bonding process.

A second embodiment of the present invention provides an encoder device for optical detection of a change in the intensity of light incident from a direction of incidence. The encoder device comprises a first terminal for delivery of an electric measurement code signal. The encoder device further comprises a first printed circuit board and a detector means mounted on the first printed circuit board. The detector means being disposed to generate the electric measurement signal so that it varies in dependence on the change in light intensity. The detector means includes at least one light-sensitive semiconductor chip which has a first light-sensitive chip surface and a second chip surface on opposing sides. The first light-sensitive chip surface has a first chip contact area for electrical connection. The encoder device further comprises a second printed circuit board positioned between the detector means and the code means, wherein the second printed circuit board is shaped so as to allow the passage of light from the direction of incidence to the detector means. The second printed circuit board has a first PCB contact area connected to the terminal, wherein the first PCB contact area is connected to the first chip contact area by solder, electrically conducting glue or by ohmic contact.

An advantage of the present invention is that it there is no need for bond wires. Thus is the relative high cost of bonding avoided.

Yet another advantage of the present invention is that the daughter board will provide mechanical protection to photo diodes and there are no bond wires that need mechanical protection. Thus there is no need of silicon as mechanical and moisture protection.

Another advantage of the present invention is that the production can be done in normal production facility. No clean room environment is necessary. This enables a fast and highly automated production method.

A further advantage of the present invention is that it enables the option to place other components, such as amplifiers etc, on the first circuit board and/or the second circuit board. This results in better signal quality from photo diode/array/light detector through having amplifier and other electronics close the photo diode itself.

A yet further advantage of the present invention is that it enables that soldering may be done in one step, instead of two times or more. This provides a better accuracy by one instead of two tolerances.

Further advantages and features of embodiments of the present invention will become apparent when reading the following detailed description in conjunction with the drawings.

### BRIEF DESCRIPTION OF THE DRAWINGS

Fig. 1 illustrates an exploded view of an exemplary embodiment of the encoder device according to the present invention.
Fig. 1b illustrates an assembled view of the exemplary embodiment of the encoder device in figure 1.
Fig. 2 illustrates an exploded view of an exemplary embodiment of the encoder device according to the present invention.
Fig. 3 illustrates an exploded view of an exemplary embodiment of the encoder device according to the present invention.
Fig. 4 illustrates an exploded view of an exemplary embodiment of the encoder device according to the present invention.
Fig. 5 illustrates an exploded view of an exemplary embodiment of the encoder device according to the present invention
Fig. 6 illustrates an exploded view of an exemplary embodiment of the encoder device according to the present invention.
Fig. 7 illustrates an exploded view of an exemplary embodiment of the encoder device according to the present invention

### DETAILED DESCRIPTION

In the following description, for purposes of explanation and not limitation, specific details are set forth, such as device configurations in order to provide a thorough understanding of the present invention. It will be apparent to one skilled in the art that the present invention may be carried out in other embodiments that depart from these specific details.

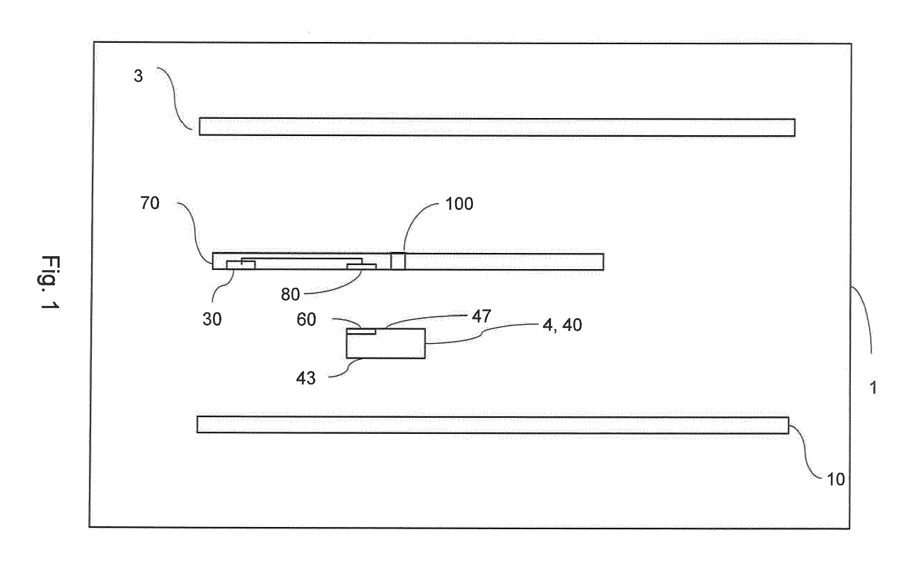

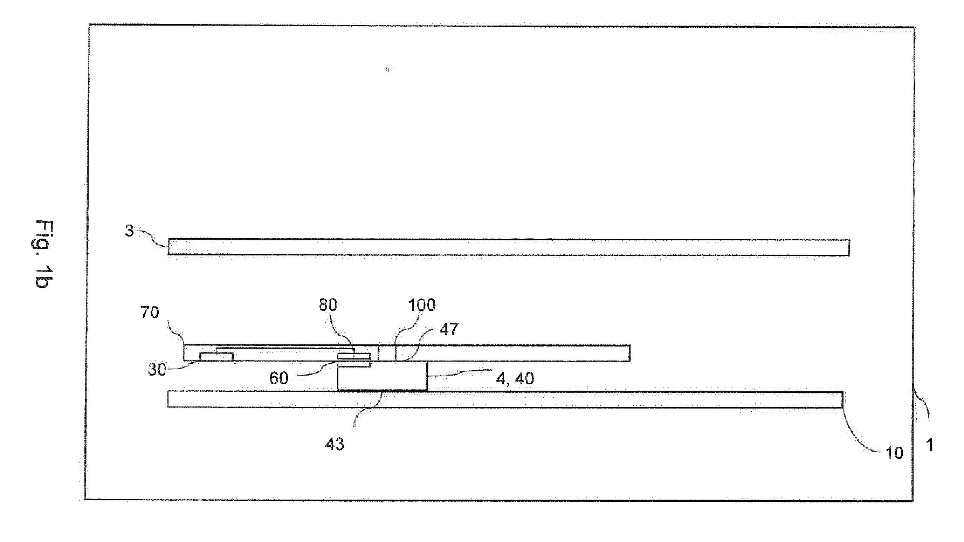

Referring to figure 1 there is illustrated an exploded view of an exemplary embodiment of an encoder device 1 for optical detection of movement or position according to the present invention. The encoder device 1 comprises a first terminal 30 for delivery of an electric measurement code signal. A detector means 4 is mounted on a first printed circuit board 10 inside the encoder device 1. The encoder device 1 further comprises a code means 3 provided with a pattern. The code means 3 can be a transparent disc with a pattern that at certain points shadow light from a light source (not shown). The detector means 4 and code means 3 being displaceable relative to each other. The detector means 4 is disposed to generate an electric measurement code signal in dependence on the relative displacement. The detector means 4 includes at least one light-sensitive semiconductor chip 40 which having a first light-sensitive chip surface 47 and a second chip surface 43 on opposing sides. The first light-sensitive chip surface 47 has at least one first chip contact area 60 for electrical connection.

The exemplary embodiment of the encoder device 1 according to the present invention shown in fig. 1 further comprises a second printed circuit board 70 positioned between the detector means 4 and the code means 3. The second printed circuit board 70 is shaped so as to allow the passage of light from the code means 3 to the first light-sensitive chip surface 47. In an exemplary embodiment the second printed circuit board 70 comprises at least one opening 100 so as to allow the passage of light from the code means 3 to the detector means 4.
A first PCB contact area 80 provided at the second printed circuit board 70 is connected to the terminal 30. The first PCB contact area 80 is connected to the first chip contact area 60 by solder, electrically conducting glue or by ohmic contact.

Referring to figure 1b there is illustrated an assembled view of the exemplary embodiment of the encoder device 1 in figure 1.

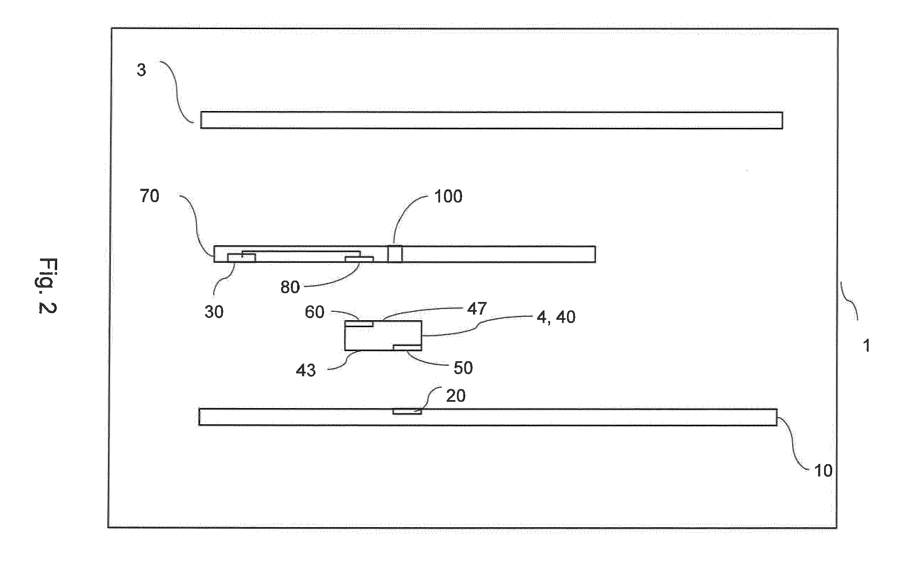

Figure 2 illustrates yet another exemplary embodiment of the encoder device 1 according to the present invention. In this exemplary embodiment the first printed circuit board 10 has a second PCB contact area 20 and the second chip surface 43 has a second chip contact area 50 connected to the second PCB contact area 20 by solder, electrically conducting glue or by ohmic contact.

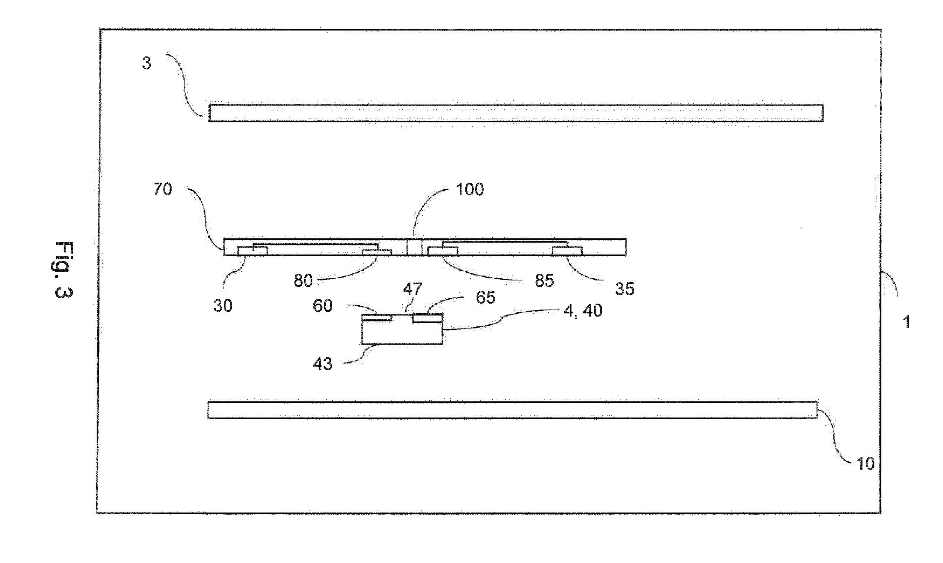

Figure 3 illustrates yet another exemplary embodiment of the encoder device 1 according to the present invention. In this exemplary embodiment the second printed circuit board 70 has a second PCB contact area 85 and the first chip surface 47 having a second chip contact 65.

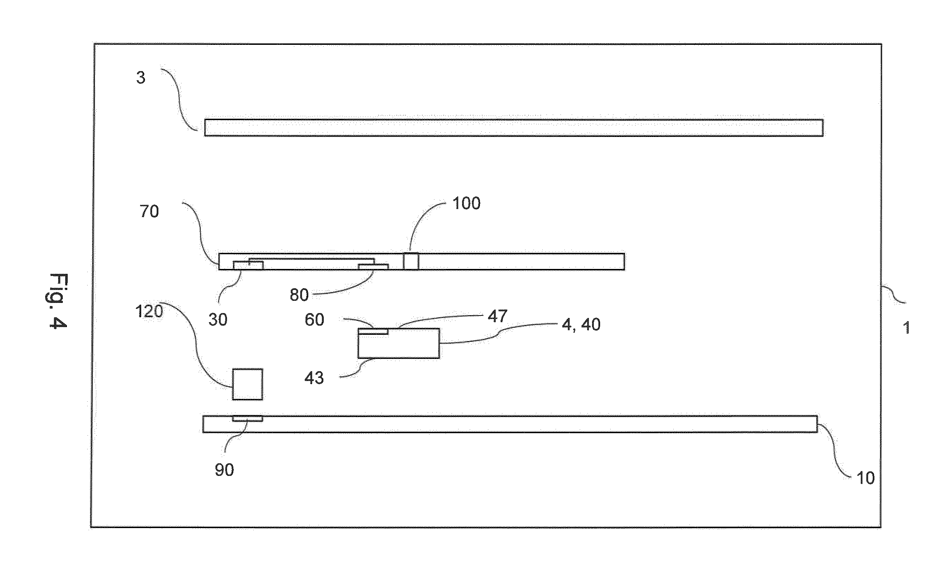

Figure 4 illustrates a further exemplary embodiment of the encoder device 1 according to the present invention. In this exemplary embodiment the first printed circuit board 10 further comprises a second terminal 90. An electrically conductive device 120 is adapted to provide electrical connection between the second terminal 90 on the first printed circuit board 10 and the first contact area 30 on the second printed circuit board 70.

In yet another exemplary embodiment of the encoder device 1 according to the present invention the electrically conductive device 120 comprises a flexible body which has a first end which is attached to the first printed circuit board 10 with a first connection and a second end which is attached to the second printed circuit board 70 with a second connection.

In the encoder device 1 according to the present invention when solder is included, the solder may be substantially free from lead. Lead free soldering requires higher soldering temperature.

In yet another exemplary embodiment of the encoder device 1 according to the present invention, the encoder device 1 further comprises a clamping means when including at least one chip contact area 80, 20 being connected by ohmic contact to a corresponding PCB contact area 50, 60. The clamping means is adapted to provide a certain amount of pressure acting to squeeze the second printed circuit board 70 towards the first printed circuit board 10 so as to hold the detector means 4 at a predetermined position between the second printed circuit board 70 and the first printed circuit board 10 such that the ohmic contact is maintained. In this exemplary embodiment the first printed circuit board 10 may have a shaped portion for positioning the detector means 4 at the predetermined position such that the first chip contact area 50 faces the first PCB contact area 20. In yet another exemplary embodiment the first printed circuit board 10 has at least two projections which are protruding from the printed circuit board surface on which the first PCB contact area 20 is located. The at least two projections co-operating with a physical shape of the detector means 4 so as to position the detector means 4 at the predetermined position such that the first chip contact area 50 faces the first PCB contact area 20.

In another exemplary embodiment of the encoder device 1 according to the present invention the second chip contact area 50 is connected to the second PCB contact area 20 by solder or electrically conducting glue and the first PCB contact area 80 is connected to the first chip contact area 60 by ohmic contact.

In an exemplary embodiment of the encoder device 1 according to the present invention the electrically conductive device 120 is attached to the first printed circuit board 10 and to the second printed circuit board 70 by solder or electrically conducting glue such that the first printed circuit board 10 co-operates with the second printed circuit board 70 to hold the detector means 4 at a predetermined position between the second printed circuit board 70 and the first printed circuit board 10 such that the ohmic contact is maintained.

In yet another exemplary embodiment of the encoder device 1 according to the present invention the electrically conductive device 120 comprises a resilient or elastic member adapted to urge the second printed circuit board 70 towards the first printed circuit board 10.

A further exemplary embodiment of the encoder device 1 according to the present invention comprises a light source arranged and positioned so that the code means 3 is provided in a space between the second printed circuit board 70 and the light source.

In an exemplary embodiment of the encoder device 1 with the lights source the second printed circuit board 70 has at least one opening which is shaped so as to allow the passage of light to the detector means 4 from a direction of incidence defined by the position of the light source, and wherein the second printed circuit board 70 has a predetermined thickness, the predetermined thickness defining a depth of at least one opening.

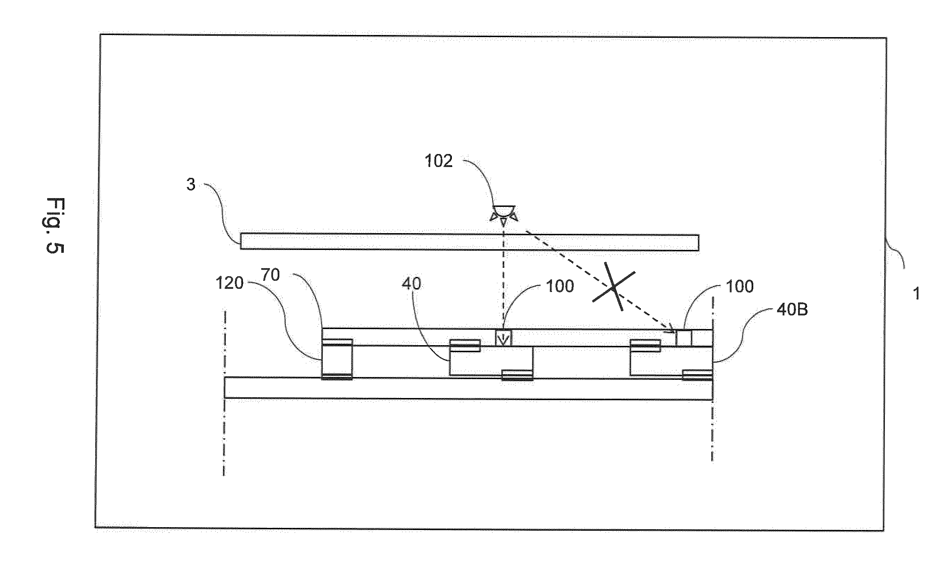

Figure 5 illustrates another exemplary embodiment of the encoder device 1 according to the present invention. In this exemplary embodiment the encoder device comprises at least a first and a second light-sensitive semiconductor chips 40, 40B adapted to generate the electric measurement code signal so that it vary in dependence on the relative displacement. The encoder device further comprises at least one light source 102 being arranged and positioned so that the code means (not shown) is provided in a space between the second printed circuit board 70 and the light source 102. The second printed circuit board 70 having at least one opening 100 which is shaped so as to allow the passage of light to the first light-sensitive semiconductor 40. The second printed circuit board 70 has a predetermined thickness, the predetermined thickness defining a depth of the at least one opening 100 such that light from the light source 102 is shielded by the second printed circuit board 70 from reaching the second light-sensitive semiconductor chip 40B.

This solution advantageously reduces or eliminates interference between code signal components originating from detector chips 40, 40B placed adjacent to each other, since this solution provides directivity in that the provision of appropriately shaped openings 100 in the second printed circuit board 70 shields the light. Hence stray light is prevented from hitting the light sensitive surface of an individual chip so that the chip will receive light substantially only via a desired portion of the code means 3.

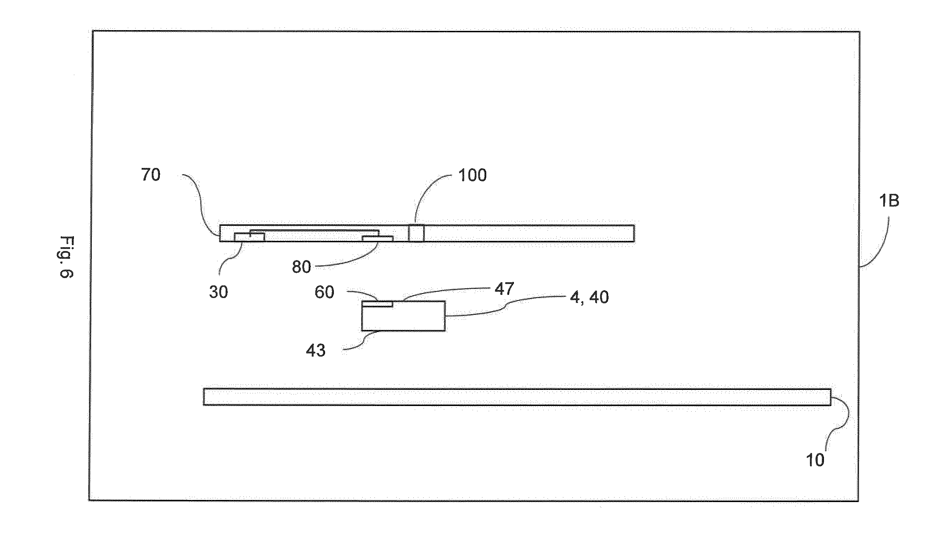

Figure 6 illustrates another embodiment of the present invention which relates to an encoder device 1B for optical detection of a change in the intensity of light incident from a direction of incidence. As can be seen in figure 6, the encoder device 1B comprises a first terminal 30 for delivery of an electric measurement code signal and a first printed circuit board 10. The encode device 1B further comprises a detector means 4 mounted on the first printed circuit board 10. The detector means 4 being disposed to generate the electric measurement signal so that it varies in dependence on the change in light intensity. The detector means 4 includes at least one light-sensitive semiconductor chip 40 having a first light-sensitive chip surface 47 and a second chip surface 43 on opposing sides. The first light-sensitive chip surface 47 having a first chip contact area 60 for electrical connection. A second printed circuit board 70 is positioned between the detector means 4 and the code means 3, wherein the second printed circuit board 70 is shaped so as to allow the passage of light from the direction of incidence to the detector means 4. The second printed circuit board 70 has a first PCB contact area 80 connected to the terminal 30, wherein the first PCB contact area 80 is connected to the first chip contact area 60 by solder, electrically conducting glue or by ohmic contact.

In another exemplary embodiment of the encoder device 1B according to the present invention the detector means 4 includes at least two light-sensitive semiconductor chips 40A, 40B. In this exemplary embodiment the second printed circuit board 70 is shaped so as to allow the passage of light from the direction of incidence to one 40A of the at least two light-sensitive semiconductor chips 40A, 40B) while shielding the one 40A of the at least two light-sensitive semiconductor chips 40A, 40B from light originating from directions deviating from the direction of incidence.

In yet another exemplary embodiment of the encoder device 1B according to the present invention the second printed circuit board 70 has at least one opening 100 so as to allow the passage of light from the direction of incidence to said detector means 4.

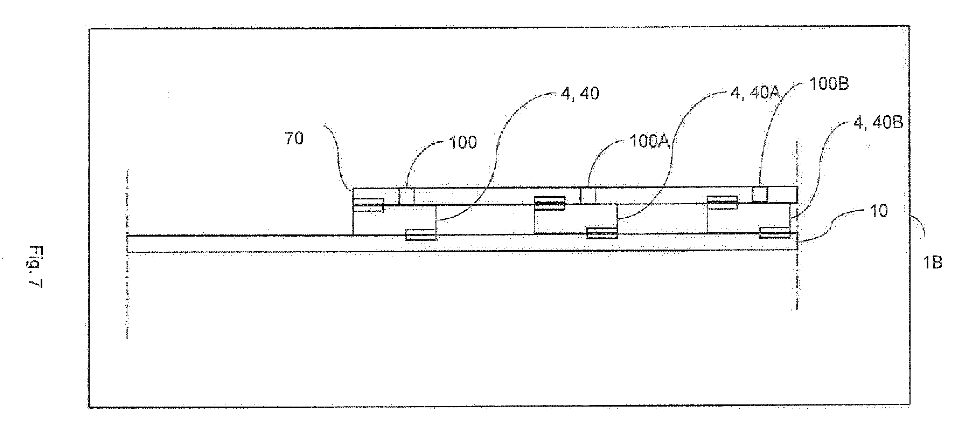

Figure 7 illustrates a further exemplary embodiment of the encoder device 1B according to the present invention. In this exemplary embodiment the detector means 4 includes a plurality of light-sensitive semiconductor chips 40, 40A and 40B. In this exemplary embodiment the second printed circuit board 70 has a plurality of openings 100, 100A, 100B which are shaped so as to allow the passage of light from the direction of incidence to the a plurality of light-sensitive semiconductor chips 40, 40A and 40B.

In yet another exemplary embodiment of the encoder device 1B according to the present invention the first chip contact area 60 is connected to the first PCB contact area 80 by solder or electrically conducting glue.

Yet another aspect of the present invention relates to a system for optical detection of a change in the intensity of light. The system comprising a light source and at least one encoder device according to any previously described embodiments.

## Claims

1. An encoder device (1) for optical detection of movement or position comprising:
a first terminal (30) for delivery of an electric measurement code signal (5);
a first printed circuit board (10);
a detector means (4) mounted on said first printed circuit board (10); and
a code means (3) provided with a pattern; said detector means (4) and code means (3) being displaceable relative to each other, wherein said detector means (4) is disposed to generate an electric measurement code signal in dependence on said relative displacement;
said detector means (4) including
at least one light-sensitive semiconductor chip (40) having a first light-sensitive chip surface (47) and a second chip surface (43) on opposing sides;
said first light-sensitive chip surface (47) having a first chip contact area (60) for electrical connection; and
a second printed circuit board (70) positioned between said detector means (4) and said code means (3), wherein
said second printed circuit board (70) is shaped so as to allow the passage of light from said code means (3) to said first light-sensitive chip surface (47) and
said second printed circuit board (70) has a first PCB contact area (80) connected to a terminal (30), the terminal (30) being located on said second printed circuit board (70); wherein said first PCB contact area (80) is connected to said first chip contact area (60) by solder, electrically conducting glue or by ohmic contact.

2. The encoder device (1) according to claim 1, wherein said first printed circuit board (10)
having a second PCB contact area (20); and
said second chip surface (43) having a second chip contact area (50) connected to said second PCB contact area (20) by solder, electrically conducting glue or by ohmic contact.

3. The encoder device (1) according to claim 1, wherein said second printed circuit board (70) having a second PCB contact area (65); and
said first chip surface (47) having a second chip contact area (50) connected to said second PCB contact area (65) by solder, electrically conducting glue or by ohmic contact.

4. The encoder device (1) according to any of claims 1 to 3, wherein
a second terminal (90B) is provided on said first printed circuit board (10), the encoder device (1) further comprising
an electrically conductive device (120) adapted to provide electrical connection between said second terminal (90B) on said first printed circuit board (10) and a second PCB contact area (90) on said second printed circuit board (70).

5. The encoder device (1) according to claim 4, wherein
said electrically conductive device (120) comprises a substantially stiff body (120) positioned between said first printed circuit board (10) and said second printed circuit board (70), and wherein
said electrical connection between said first printed circuit board (10) and said second printed circuit board (70), via said electrically conductive device (120), is adapted to include solder, electrically conducting glue or ohmic contact.

6. The encoder device (1) according to claim 4, wherein said electrically conductive device (120) comprises a flexible body having
a first end which is attached to said first printed circuit board (10) with a first connection and
a second end which is attached to said second printed circuit board (70) with a second connection.

7. The encoder device (1) according to any preceding claim, wherein said second printed circuit board (70) has
at least one opening (100) so as to allow the passage of light from said code means (3) to said detector means (4).

8. The encoder device (1) according to any preceding claim, when including at least one chip contact area (50, 60) being connected by ohmic contact to a corresponding PCB contact area (20, 80), further comprising
a clamping means adapted to provide a certain amount of pressure acting to squeeze said second printed circuit board (70) towards said first printed circuit board (10) so as to hold said detector means (4) at a predetermined position between said second printed circuit board (70) and said first printed circuit board (10) such that said ohmic contact is maintained.

9. The encoder device (1) according to claim 8, wherein
said first printed circuit board (10) has a shaped portion for positioning said detector means (4) at said predetermined position such that said first chip contact area (50) faces said first PCB contact area (20).

10. The encoder device (1) according to claim 8 or 9, wherein
said first printed circuit board (10) has at least two projections which are protruding from the printed circuit board surface on which said first PCB contact area (20) is located; said at least two projections co-operating with a physical shape of said detector means (4) so as to position said detector means (4) at said predetermined position such that said first chip contact area (50) faces said first PCB contact area (20).

11. The encoder device (1) according to any preceding claim, wherein
said second chip contact area (50) is connected to said second PCB contact area (20) by solder or electrically conducting glue; and wherein
said first PCB contact area (80) is connected to said first chip contact area (60) by ohmic contact.

12. The encoder device (1) according to claim 4
wherein
said electrically conductive device (120) is attached to the first printed circuit board (10) and to the second printed circuit board (70) by solder or electrically conducting glue such that said first printed circuit board (10) co-operates with the second printed circuit board (70) to hold said detector means (4) at a predetermined position between said second printed circuit board (70) and said first printed circuit board (10) such that said ohmic contact is maintained.

13. The encoder device (1) according to claim 12, wherein the electrically conductive device (120) comprises a resilient or elastic member adapted to urge the second printed circuit board (70) towards the first printed circuit board (10).

14. The encoder device (1) according to any preceding claim, further comprising
a light source (102) being arranged and positioned so that said code means (3) is provided in a space between said second printed circuit board (70) and said light source (102).

15. The encoder device (1) according to claim 14, wherein
said second printed circuit board (70) has at least one opening (100) which is shaped so as to allow the passage of light to said detector means (4) from a direction of incidence defined by the position of said light source (102), and wherein
said second printed circuit board (70) has a predetermined thickness, said predetermined thickness defining a depth of at least one opening (100).

16. The encoder device (1) according to any preceding claim, wherein
said detector means (4) includes
at least a first and a second light-sensitive semiconductor chips (40, 40B) adapted to generate said electric measurement code signal so that it is enabled to vary in dependence on said relative displacement; the encoder device further comprising
at least one light source (102) being arranged and positioned so that said code means (3) is provided in a space between said second printed circuit board (70) and said light source (102); and
said second printed circuit board (70) having at least one opening (100) which is shaped so as to allow the passage of light to said first light-sensitive semiconductor (40); and wherein
said second printed circuit board (70) has a predetermined thickness, said predetermined thickness defining a depth of at least one opening (100) such that light from the light source (102) is shielded by said second printed circuit board (70) from reaching said second light-sensitive semiconductor chip (40B).

## Patentansprüche

1. Codierungsvorrichtung (1) zur optischen Erfassung einer Bewegung oder Position, aufweisend:
einen ersten Anschluss (30) zur Bereitstellung eines elektrischen Messkodierungssignals (5);
eine erste Leiterplatte (10);
eine Erfassungseinrichtung (4), die auf der ersten Leiterplatte (10) angebracht ist; und
eine Kodierungseinrichtung (3), die mit einem Muster vorgesehen ist; wobei die Erfassungseinrichtung (4) und die Kodierungseinrichtung (3) relativ zueinander versetzbar sind, wobei die Erfassungseinrichtung (4) angeordnet ist, um ein elektrisches Messkodierungssignal in Abhängigkeit von dem relativen Versatz zu erzeugen;
wobei die Erfassungseinrichtung (4) umfasst:
zumindest einen lichtempfindlichen Halbleiterchip (40) mit einer ersten lichtempfindlichen Chipoberfläche (47) und einer zweiten Chipoberfläche (43) auf gegenüberliegenden Seiten;
wobei die erste lichtempfindliche Chipoberfläche (47) ein erstes Chipkontaktgebiet (60) zur elektrischen Verbindung aufweist; und
eine zweite Leiterplatte (70), die zwischen der Erfassungseinrichtung (4) und der Kodierungseinrichtung (3) positioniert ist, wobei
die zweite Leiterplatte (70) so geformt ist, um den Durchtritt von Licht von der Kodierungseinrichtung (3) zu der ersten lichtempfindlichen Chipoberfläche (47) zu ermöglichen, und
die zweite Leiterplatte (70) ein erstes PCB-Kontaktgebiet (80) aufweist, das mit einem Anschluss (30) verbunden ist, wobei der Anschluss (30) auf der zweiten Leiterplatte (70) angeordnet ist; wobei das erste PCB-Kontaktgebiet (80) mit dem ersten Chipkontaktgebiet (60) durch ein Lötmittel, elektrisch leitenden Klebstoff oder durch einen ohmschen Kontakt verbunden ist.

2. Codierungsvorrichtung (1) nach Anspruch 1, wobei die erste Leiterplatte (10) ein zweites PCB-Kontaktgebiet (20) aufweist; und
die zweite Chipoberfläche (43) ein zweites Chipkontaktgebiet (50) aufweist, das mit dem zweiten PCB-Kontaktgebiet (20) durch ein Lötmittel, elektrisch leitenden Klebstoff oder durch einen ohmschen Kontakt verbunden ist.

3. Codierungsvorrichtung (1) nach Anspruch 1, wobei die zweite Leiterplatte (70) ein zweites PCB-Kontaktgebiet (65) aufweist; und
die erste Chipoberfläche (47) ein zweites Chipkontaktgebiet (50) aufweist, das mit dem zweiten PCB-Kontaktgebiet (65) durch ein Lötmittel, elektrisch leitenden Klebstoff oder durch einen ohmschen Kontakt verbunden ist.

4. Codierungsvorrichtung (1) nach einem der Ansprüche 1 bis 3, wobei
ein zweiter Anschluss (90B) auf der ersten Leiterplatte (10) vorgesehen ist, wobei die Codierungsvorrichtung (1) ferner aufweist:
eine elektrisch leitende Vorrichtung (120), die angepasst ist, um eine elektrische Verbindung zwischen dem zweiten Anschluss (90B) auf der ersten Leiterplatte (10) und einem zweiten PCB-Kontaktgebiet (90) auf der zweiten Leiterplatte (70) vorzusehen.

5. Codierungsvorrichtung (1) nach Anspruch 4, wobei
die elektrisch leitende Vorrichtung (120) einen im Wesentlichen steifen Körper (120) aufweist, der zwischen der ersten Leiterplatte (10) und der zweiten Leiterplatte (70) positioniert ist, und wobei
die elektrische Verbindung zwischen der ersten Leiterplatte (10) und der zweiten Leiterplatte (70) über die elektrisch leitende Vorrichtung (120) angepasst ist, um ein Lötmittel, elektrisch leitenden Klebstoff oder einen ohmschen Kontakt zu umfassen.

6. Codierungsvorrichtung (1) nach Anspruch 4, wobei die elektrisch leitende Vorrichtung (120) einen flexiblen Körper aufweist, mit:
einem ersten Ende, das an der ersten Leiterplatte (10) mit einer ersten Verbindung angebracht ist, und
einem zweiten Ende, das an der zweiten Leiterplatte (70) mit einer zweiten Verbindung angebracht ist.

7. Codierungsvorrichtung (1) nach einem der vorangehenden Ansprüche, wobei die zweite Leiterplatte (70) aufweist:
zumindest eine Öffnung (100), um den Durchtritt von Licht von der Kodierungseinrichtung (3) zu der Erfassungseinrichtung (4) zu ermöglichen.

8. Codierungsvorrichtung (1) nach einem der vorangehenden Ansprüche, wenn zumindest ein Chipkontaktgebiet (50, 60) umfasst ist, das durch einen ohmschen Kontakt mit einem korrespondierenden PCB-Kontaktgebiet (20, 80) verbunden ist, ferner aufweisend:
eine Klemmeinrichtung, die angepasst ist, um eine bestimmte Menge an Druck vorzusehen, um die zweite Leiterplatte (70) in Richtung der ersten Leiterplatte (10) zu drücken, damit die Erfassungseinrichtung (4) an einer vorbestimmten Position zwischen der zweiten Leiterplatte (70) und der ersten Leiterplatte (10) derart gehalten wird, dass der ohmsche Kontakt aufrechterhalten wird.

9. Codierungsvorrichtung (1) nach Anspruch 8, wobei
die erste Leiterplatte (10) einen geformten Abschnitt zur Positionierung der Erfassungseinrichtung (4) an der vorbestimmten Position derart aufweist, dass das erste Chipkontaktgebiet (50) dem ersten PCB-Kontaktgebiet (20) zugewandt ist.

10. Codierungsvorrichtung (1) nach Anspruch 8 oder 9, wobei
die erste Leiterplatte (10) zumindest zwei Vorsprünge aufweist, welche von der Leiterplattenoberfläche vorstehen, auf welcher das erste PCB-Kontaktgebiet (20) angeordnet ist; wobei die zumindest zwei Vorsprünge mit einer physikalischen Form der Erfassungseinrichtung (4) zusammenwirken, damit die Erfassungseinrichtung (4) an der vorbestimmten Position derart positioniert wird, dass das erste Chipkontaktgebiet (50) dem ersten PCB-Kontaktgebiet (20) zugewandt ist.

11. Codierungsvorrichtung (1) nach einem der vorangehenden Ansprüche, wobei
das zweite Chipkontaktgebiet (50) mit dem zweiten PCB-Kontaktgebiet (20) durch ein Lötmittel oder elektrisch leitenden Klebstoff verbunden ist; und wobei
das erste PCB-Kontaktgebiet (80) mit dem ersten Chipkontaktgebiet (60) durch einen ohmschen Kontakt verbunden ist.

12. Codierungsvorrichtung (1) nach Anspruch 4, wobei
die elektrisch leitende Vorrichtung (120) an der ersten Leiterplatte (10) und an der zweiten Leiterplatte (70) durch ein Lötmittel oder elektrisch leitenden Klebstoff derart angebracht ist, dass die erste Leiterplatte (10) mit der zweiten Leiterplatte (70) zusammenwirkt, um die Erfassungseinrichtung (4) an einer vorbestimmten Position zwischen der zweiten Leiterplatte (70) und der ersten Leiterplatte (10) derart zu halten, dass ein ohmscher Kontakt aufrechterhalten wird.

13. Codierungsvorrichtung (1) nach Anspruch 12, wobei
die elektrisch leitende Vorrichtung (120) ein nachgiebiges oder elastisches Element aufweist, das angepasst ist, um die zweite Leiterplatte (70) in Richtung der ersten Leiterplatte (10) zu drängen.

14. Codierungsvorrichtung (1) nach einem der vorangehenden Ansprüche, ferner aufweisend:
eine Lichtquelle (102), die so angeordnet und positioniert ist, dass die Codierungseinrichtung (3) in einem Raum zwischen der zweiten Leiterplatte (70) und der Lichtquelle (102) vorgesehen ist.

15. Codierungsvorrichtung (1) nach Anspruch 14, wobei die zweite Leiterplatte (70) zumindest eine Öffnung (100) aufweist, welche so geformt ist, um den Durchtritt von Licht zu der Erfassungseinrichtung (4) von einer Einfallsrichtung, die durch die Position der Lichtquelle (102) definiert ist, zu ermöglichen, und wobei
die zweite Leiterplatte (70) eine vorbestimmte Dicke aufweist, wobei die vorbestimmte Dicke eine Tiefe von zumindest einer Öffnung (100) definiert.

16. Codierungsvorrichtung (1) nach einem der vorangehenden Ansprüche, wobei
die Erfassungseinrichtung (4) umfasst:
zumindest einen ersten und einen zweiten lichtempfindlichen Halbleiterchip (40, 40B), die angepasst sind, um das elektrische Messkodierungssignal so zu erzeugen, dass es in Abhängigkeit von dem relativen Versatz variieren kann; wobei die Codierungsvorrichtung ferner aufweist:
zumindest eine Lichtquelle (102), die so angeordnet und positioniert ist, dass die Codierungseinrichtung (3) in einem Raum zwischen der zweiten Leiterplatte (70) und der Lichtquelle (102) vorgesehen ist; und
die zweite Leiterplatte (70) zumindest eine Öffnung (100) aufweist, welche so geformt ist, dass der Durchtritt von Licht zu dem ersten lichtempfindlichen Halbleiter (40) ermöglicht wird; und wobei
die zweite Leiterplatte (70) eine vorbestimmte Dicke aufweist, wobei die vorbestimmte Dicke eine Tiefe von zumindest einer Öffnung (100) derart definiert, dass Licht von der Lichtquelle (102) durch die zweite Leiterplatte (70) von einem Erreichen des zweiten lichtempfindlichen Halbleiterchips (40B) abgeschirmt wird.

## Revendications

1. Dispositif formant encodeur (1) pour la détection optique d'un mouvement ou d'une position comprenant :
une première borne (30) pour la distribution d'un signal de code de mesure électrique (5) ;
une première carte de circuit imprimé (10) ;
des moyens formant détecteur (4) montés sur ladite première carte de circuit imprimé (10) ; et
des moyens formant code (3) pourvus d'un motif ; lesdits moyens formant détecteur (4) et lesdits moyens formant code (3) pouvant être déplacés l'un par rapport à l'autre, dans lequel lesdits moyens formant détecteur (4) sont disposés pour générer un signal de code de mesure électrique en fonction dudit déplacement relatif ;
lesdits moyens formant détecteur (4) comprenant
au moins une puce semi-conductrice sensible à la lumière (40) comportant une première surface de puce sensible à la lumière (47) et une deuxième surface de puce (43) sur des côtés opposés ;
ladite première surface de puce sensible à la lumière (47) comportant une première zone de contact de puce (60) pour une connexion électrique ; et
une deuxième carte de circuit imprimé (70) positionnée entre lesdits moyens formant détecteur (4) et lesdits moyens formant code (3), dans lequel
ladite deuxième carte de circuit imprimé (70) est formée de manière à permettre le passage de la lumière desdits moyens formant code (3) vers ladite première surface de puce sensible à la lumière (47), et
ladite deuxième carte de circuit imprimé (70) comporte une première zone de contact de PCB (80) connectée à une borne (30), la borne (30) étant située sur ladite deuxième carte de circuit imprimé (70) ; dans lequel ladite première zone de contact de PCB (80) est connectée à ladite première zone de contact de puce (60) par une soudure, par une colle électriquement conductrice ou par un contact ohmique.

2. Dispositif formant encodeur (1) selon la revendication 1, dans lequel ladite première carte de circuit imprimé (10) comporte une deuxième zone de contact de PCB (20) ; et
ladite deuxième surface de puce (43) comporte une deuxième zone de contact de puce (50) connectée à ladite deuxième zone de contact de PCB (20) par une soudure, une colle électriquement conductrice ou par un contact ohmique.

3. Dispositif formant encodeur (1) selon la revendication 1, dans lequel ladite deuxième carte de circuit imprimé (70) comporte une deuxième zone de contact de PCB (65) ; et
ladite première surface de puce (47) comporte une deuxième zone de contact de puce (50) connectée à ladite deuxième zone de contact de PCB (65) par une soudure, une colle électriquement conductrice ou par un contact ohmique.

4. Dispositif formant encodeur (1) selon l'une quelconque des revendications 1 à 3, dans lequel
une deuxième borne (90B) est prévue sur ladite première carte de circuit imprimé (10), le dispositif formant encodeur (1) comprenant en outre
un dispositif électriquement conducteur (120) conçu pour réaliser une connexion électrique entre ladite deuxième borne (90B) sur ladite première carte de circuit imprimé (10) et une deuxième zone de contact de PCB (90) sur ladite deuxième carte de circuit imprimé (70).

5. Dispositif formant encodeur (1) selon la revendication 4, dans lequel
ledit dispositif électriquement conducteur (120) comprend un corps sensiblement rigide (120) positionné entre ladite première carte de circuit imprimé (10) et ladite deuxième carte de circuit imprimé (70), et dans lequel
ladite connexion électrique entre ladite première carte de circuit imprimé (10) et ladite deuxième carte de circuit imprimé (70), par l'intermédiaire dudit dispositif électriquement conducteur (120), est conçue pour comprendre une soudure, une colle électriquement conductrice ou un contact ohmique.

6. Dispositif formant encodeur (1) selon la revendication 4, dans lequel ledit dispositif électriquement conducteur (120) comprend un corps souple comportant
une première extrémité qui est attachée à ladite première carte de circuit imprimé (10) par une première connexion, et
une deuxième extrémité qui est attachée à ladite deuxième carte de circuit imprimé (70) par une deuxième connexion.

7. Dispositif formant encodeur (1) selon l'une quelconque des revendications précédentes, dans lequel ladite deuxième carte de circuit imprimé (70) comporte
au moins une ouverture (100) de manière à permettre le passage de la lumière desdits moyens formant code (3) vers lesdits moyens formant détecteur (4).

8. Dispositif formant encodeur (1) selon l'une quelconque des revendications précédentes, lorsqu'il comprend au moins une zone de contact de puce (50, 60) qui est connectée par un contact ohmique à une zone de contact de PCB (20, 80) correspondante, comprenant en outre
des moyens de serrage conçus pour fournir une certaine quantité de pression agissant pour presser ladite deuxième carte de circuit imprimé (70) vers ladite première carte de circuit imprimé (10) de manière à maintenir lesdits moyens formant détecteur (4) à une position prédéterminée entre ladite deuxième carte de circuit imprimé (70) et ladite première carte de circuit imprimé (10) de sorte que ledit contact ohmique soit maintenu.

9. Dispositif formant encodeur (1) selon la revendication 8, dans lequel
ladite première carte de circuit imprimé (10) comporte une partie formée pour le positionnement desdits moyens formant détecteur (4) à ladite position prédéterminée de sorte que ladite première zone de contact de puce (50) soit orientée vers ladite première zone de contact de PCB (20).

10. Dispositif formant encodeur (1) selon la revendication 8 ou 9, dans lequel
ladite première carte de circuit imprimé (10) comporte au moins deux protubérances qui font saillie de la surface de la carte de circuit imprimé sur laquelle ladite première zone de contact de PCB (20) est située ; lesdites au moins deux protubérances coopèrent avec une forme physique desdits moyens formant détecteur (4) de manière à positionner lesdits moyens formant détecteur (4) à ladite position prédéterminée de sorte que ladite première zone de contact de puce (50) soit orientée vers ladite première zone de contact de PCB (20).

11. Dispositif formant encodeur (1) selon l'une quelconque des revendications précédentes, dans lequel
ladite deuxième zone de contact de puce (50) est connectée à ladite deuxième zone de contact de PCB (20) par une soudure ou une colle électriquement conductrice ; et dans lequel
ladite première zone de contact de PCB (80) est connectée à ladite première zone de contact de puce (60) par un contact ohmique.

12. Dispositif formant encodeur (1) selon la revendication 4, dans lequel
ledit dispositif électriquement conducteur (120) est attaché à la première carte de circuit imprimé (10) et à la deuxième carte de circuit imprimé (70) par une soudure ou une colle électriquement conductrice de sorte que ladite première carte de circuit imprimé (10) coopère avec la deuxième carte de circuit imprimé (70) pour maintenir lesdits moyens formant détecteur (4) à une position prédéterminée entre ladite deuxième carte de circuit imprimé (70) et ladite première carte de circuit imprimé (10) de sorte que ledit contact ohmique soit maintenu.

13. Dispositif formant encodeur (1) selon la revendication 12, dans lequel le dispositif électriquement conducteur (120) comprend un élément résilient ou élastique conçu pour pousser la deuxième carte de circuit imprimé (70) vers la première carte de circuit imprimé (10).

14. Dispositif formant encodeur (1) selon l'une quelconque des revendications précédentes, comprenant en outre
une source de lumière (102) agencée et positionnée de sorte que lesdits moyens formant code (3) soient prévus dans un espace entre ladite deuxième carte de circuit imprimé (70) et ladite source de lumière (102).

15. Dispositif formant encodeur (1) selon la revendication 14, dans lequel
ladite deuxième carte de circuit imprimé (70) comporte au moins une ouverture (100) qui est formée de manière à permettre le passage de la lumière vers lesdits moyens formant détecteur (4) à partir d'une direction d'incidence définie par la position de ladite source de lumière (102), et dans lequel
ladite deuxième carte de circuit imprimé (70) a une épaisseur prédéterminée, ladite épaisseur prédéterminée définissant une profondeur d'au moins une ouverture (100).

16. Dispositif formant encodeur (1) selon l'une quelconque des revendications précédentes, dans lequel
lesdits moyens formant détecteur (4) comprennent
au moins des première et deuxième puces semiconductrices sensibles à la lumière (40, 40B) conçues pour générer ledit signal de code de mesure électrique de sorte qu'il puisse varier en fonction dudit déplacement relatif ; le dispositif formant encodeur comprenant en outre
au moins une source de lumière (102) qui est agencée et positionnée de sorte que lesdits moyens formant code (3) soient prévus dans un espace entre ladite deuxième carte de circuit imprimé (70) et ladite source de lumière (102) ; et
ladite deuxième carte de circuit imprimé (70) comportant au moins une ouverture (100) qui est formée de manière à permettre le passage de la lumière vers ladite première puce semi-conductrice sensible à la lumière (40) ; et dans lequel
ladite deuxième carte de circuit imprimé (70) a une épaisseur prédéterminée, ladite épaisseur prédéterminée définissant une profondeur d'au moins une ouverture (100) de sorte que ladite deuxième carte de circuit imprimé (70) empêche la lumière provenant de la source de lumière (102) d'atteindre ladite deuxième puce semi-conductrice sensible à la lumière (40B).
